# EUROPEAN PATENT APPLICATION

(11) **EP 3 421 256 A1**
(43) Date of publication of application: **02.01.2019**
(21) Application number: 17382421.0
(22) Date of filing: 30.06.2017
(51) Int. Cl.: B60B 11/00, B62D 61/12, B60S 9/10

(54) **STEERING STABILIZER**

(71) Applicant: Aselor Gestión de Empresas S.L., 46021 Valencia (ES)
(72) Inventor: MORALES MONTESINOS, Lorenzo, 46022 VALENCIA (ES); GADEA CERDERA, Mariano, 46022 VALENCIA (ES)
(74) Representative: Pons

(57) **Abstract**

A steering stabilizer which acts when it detects pressure loss in a tire; it may be coupled to or uncoupled from an axle of the vehicle (6) and reusable. It comprises a bar (2) joined to the axle (6) in a tilting and detachable manner; a pneumatic cushion (5), joined to the bar (2), causing said bar to tilt when inflated, causing safety movement elements (4) contacting the ground to act as a substitute for a damaged wheel. It also comprises an electrovalve (9) allowing air passing from a drum (10) to a pneumatic cushion (5); a controller (11) that receives a signal from a pressure sensor (12) to inflate the pneumatic cushion (5), and a reset device (13) configured to allow for the deflation of the pneumatic cushion (5) causing the tilting of the bar (2).

## Description

### OBJECT OF THE INVENTION

The present invention falls within the technical field of steering stabilizer systems.

The steering stabilizer has been designed such that when it detects pressure loss in a tire, for example due to a blowout or puncture, it is activated as a substitute for the damaged wheel in order to prevent the driver from losing control over the vehicle.

### BACKGROUND OF THE INVENTION

In the state of the art, safety devices for automobiles which are intended to avoid possible vehicle rollovers, for example in the case of accidental collisions or tire punctures, are known.

For example, document ES2402973, owned by this applicant, describes a safety device which acts in the case of a puncture or pressure loss in the tires of a transportation vehicle. The device comprises two horseshoe-shaped pieces joined to the leaf spring of the vehicle and which join to the head of a bar which may tilt by means of the inflation of a pneumatic cushion joined to the same. At the end of the bar there is an undercarriage with bearings which stay in contact with the ground when the pneumatic cushion is completely inflated. The device comprises a cylinder of compressed air which inflates the cushion the moment it detects that there is a loss of air in any of the tires.

It is also known document GB2365826 which describes a structure for a tilting steering column. It proposes a mechanism which allows the tilting steering column to absorb the effects of a possible blow to the steered wheels of a vehicle. This allows the driver to maintain control of the vehicle to prevent the vehicle from overturning. It is not a solution to the problem of a tire blowout since it does not comprise auxiliary elements that substitute said wheel.

Document CN205326691 describes a system comprising small-sized wheels which are installed on the axle of the vehicle. The system is designed so that when a tire blowout occurs on one of the vehicle's wheels, at least one of the small-sized wheels of the system makes contact with the ground.

Likewise, document US2009127839 describes a system which is joined to an axle of a trailer-type vehicle, near the wheel, and which is joined to the axle by means of inverted U-bolts (the type used by trucks). It comprises steel skid plates, mounted to the leaf spring of the vehicle such that when a tire is punctured said plates come into contact with the ground, creating sparks to alert adjacent motorists or pedestrians about the emergency.

### DESCRIPTION OF THE INVENTION

The steering stabilizer of the present invention detects when there is a loss of pressure in a wheel of a vehicle and is activated to prevent the vehicle from overturning and to ensure that the driver has control of the vehicle. It is especially designed to be installed in large volume vehicles, although it may also be installed in vans, low-tonnage trucks and buses.

The stabilizer comprises at least a tire-pressure sensor, or is connected to the vehicle's tire pressure sensor, if the vehicle already has said sensor. When it detects a tire blowout or puncture, the sensor sends a signal to a controller which activates an electrovalve which allows for the passage of air from a drum to a pneumatic cushion.

The drum of the stabilizer is an element that is independent from the drum or drums which are factory-installed in the vehicle. This is due to the fact that any standard drum in the vehicle already has specific dimensions for a particular application, such as to control the brakes of the vehicle and connecting it to the stabilizer could affect the functioning thereof.

When said pneumatic cushion is inflated, it makes a bar pivot on the free end thereof, on which there is at least one safety movement element. Preferably, on the free end of the bar, there is a fork, at the ends of which there are two auxiliary wheels (one on each end) with a rotary hub. When the at least one safety movement element comes into contact with the ground, it acts as a substitute for the damaged wheel. This way, at least one new support point is created in order to prevent the rim of the damaged vehicle wheel from touching the ground. The driver is therefore guaranteed to have control of the vehicle, is able to prevent it from fishtailing and may safely steer it off the road. Thus, the most important advantage of the present invention is that it allows serious accidents to be avoided by preventing large vehicles from fishtailing or overturning.

An important advantage of the present invention with respect to other solutions in the state of the art is that it is joined to the axle of the vehicle, as an additional system of said vehicle. This way, the stabilizer proposed does not interfere with the behavior of the vehicle's standard pieces.

For example, in previously known solutions, in which the stabilizer systems are joined to the leaf springs of the vehicle, manufacturers of the leaf springs were not responsible for the behavior of the leaf springs, which could be affected by joining the stabilizer to the same. In other words, the stabilizer of the present invention allows the system to be mounted on a vehicle without altering the specifications of the same. Furthermore, the design of the stabilizer has been made such that it is an accessory that is easy to connect to the vehicle.

Another essential advantage of the present invention is that the stabilizer is activated in less than one second from the moment a loss of pressure is detected in the tire (for example due to a blowout). Due to the air pressures with which the system works, and because of the electrovalve, the activation time has been significantly reduced with respect to other solutions in the state of the art. This allows the driver to maintain control of the vehicle since only one second goes by from the moment a blowout occurs to the time the safety movement elements makes contact with the ground and follows the direction established by the other wheel.

Preferably, two steering stabilizers are installed on each vehicle, each one being linked to a steered wheel. This way, regardless of which wheel is damaged, the corresponding steering stabilizer will be activated.

Additionally, another advantage of the stabilizer is that it is ecological since the complete system functions with compressed air and not with oil or other toxic fluids. Therefore, in the case of a leakage or rupture (caused for example by a serious blow), all that is released into the environment is air, and not said toxic fluids.

Preferably, the safety movement element incorporates an axial conical rotor which allows it to follow the direction established by the drive wheel which is still active. This way the driver may safely steer the vehicle off the road. If there is no axial conical rotor, the "undercarriage" which would be in its place would make direct contact with the ground but without allowing changes in the direction. In other words, it would only act to prevent the vehicle from overturning.

The stabilizer uses the air circuits of the vehicle since, as was previously described, the pneumatic cushion is connected to a drum. Likewise, the electrovalve is configured based on said connection

The key to the stabilizer is that it may be uncoupled and reused. Therefore, it may be placed in any standard vehicle without altering the specifications of any of the components thereof. Moreover, it has the additional advantage that, given that it may be reset, it may be continuously used in the same vehicle in spite of having been previously activated and/or may be used in other vehicles after having been removed from a vehicle in which it was installed.

### DESCRIPTION OF THE DRAWINGS

As a complement to the description provided herein and for the purpose of helping to make the characteristics of the invention more readily understandable, in accordance with a preferred practical embodiment thereof, said description is accompanied by a set of drawings constituting an integral part of the same, which by way of illustration and not limitation represent the following:
Figure 1 shows a diagram of the steering stabilizer.
Figure 2 shows the steering stabilizer after there has been a tire blowout or puncture and the bar has tilted to the point where the auxiliary wheels have come into contact with the ground.

### PREFERRED EMBODIMENT OF THE INVENTION

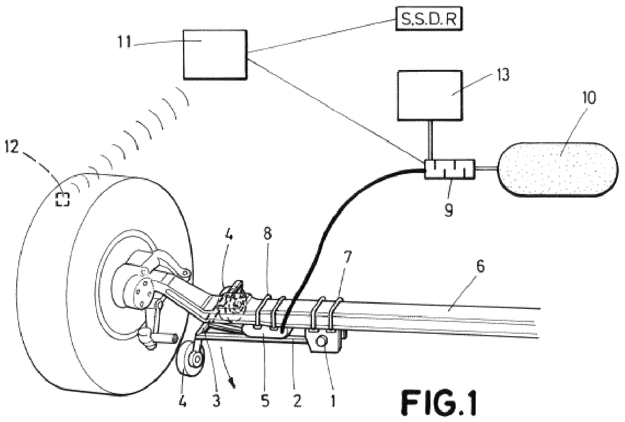

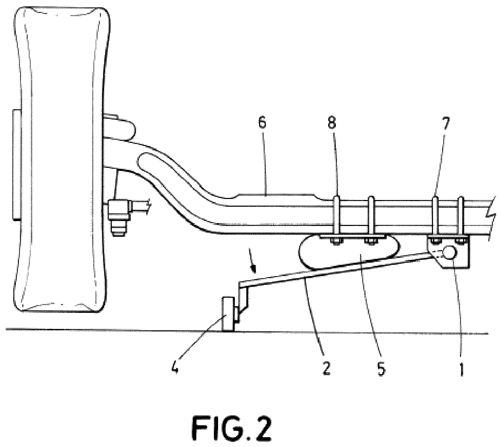

What follows is a description, with the help of figures 1 and 2, of an exemplary embodiment of the present invention.

The steering stabilizer proposed is intended to be installed in a vehicle and may be coupled to or uncoupled from said vehicle. In other words, the stabilizer may be used in vehicles which do not come with one that is factory-installed. Moreover, it is a reusable stabilizer.

As may be observed in figure 1, the stabilizer comprises at least one bar (2) with a first end (1), a pneumatic cushion (5), which is joined to the bar (2) such that by inflating or deflating it causes the tilting of the bar (2) about the first end (1), and at least one safety movement element (4).

Said at least one safety movement element (4) is joined to a free end (3) of the bar (2) and arranged such that when the pneumatic cushion inflates (5) and the bar (2) tilts, it comes into contact with the ground.

The bar (2) tilts about the first end (1) to go from a resting position in which the pneumatic cushion (5) is deflated and the bar (2) is approximately in a parallel direction to the axle (6) (as shown in figure 1) to an active position. In the active position the pneumatic cushion (5) has been inflated and caused the tilting of the bar (2) until the safety movement elements (4) coming into contact with the ground.

Likewise, the stabilizer comprises first detachable joining means (7) for joining the first end (1) of the bar (2) to the axle (6) of the vehicle and second detachable joining means (8) for joining the pneumatic cushion (5) to the axle (6) of the vehicle.

The pneumatic cushion (5) is inflated by means of a drum (10). Therefore, the steering stabilizer comprises an electrovalve (9) configured to be connected to said drum (10) and to the pneumatic cushion (5). The electrovalve (9) regulates the passage of air between both components.

Likewise, the stabilizer comprises a sensor (12) which detects the pressure of at least one wheel of the vehicle and a controller (11) connected to said sensor (12). The controller (11) activates the electrovalve (9) by receiving a signal from the sensor (12) indicating low pressure in the tire, allowing the passage of air from the drum (10) to the pneumatic cushion (5). In a preferred embodiment, the sensor (12) is a tire pressure sensor which is already incorporated in the vehicle. In these cases, the controller (11) is connected to said sensor of the vehicle and receives information from the same.

The stabilizer also comprises a reset device (13) connected to the electrovalve (11) configured to allow the pneumatic cushion (5) to deflate causing the tilting of the bar (2). Therefore, the steering stabilizer additionally comprises a reset button, connected to the electrovalve (9). When the user actuates said reset button, the electrovalve (9) causes the pneumatic cushion to deflate (5). In other words, the pneumatic circuit is connected to one of the outputs of the electrovalve (9) which removes the air inside the pneumatic cushion (5). As the pneumatic cushion deflates (5), the bar (2) tilts back to its initial position. Thus, the stabilizer is reset, ready to be used again when necessary.

The safety movement element (4) is at least one wheel joined to the free end (3) of the bar (2) by means of a rotary hub. Preferably, there are springs in the joint between the safety movement element (4) and the bar (2). When the stabilizer is in a resting position, and when the safety movement elements (4) are not in contact with the ground, the spring allows said safety movement elements (4) to be oriented in the advance direction of the vehicle.

When the steering stabilizer is actuated and the hydraulic cushion (5) is inflated, it causes the tilting of the bar (2) until the auxiliary wheels come into contact with the ground, as shown in figure 2. At this moment, due to the friction to which they are subjected, they follow the corresponding direction of the other steered wheel of the vehicle since this friction is a greater force than that exerted by the previously described springs. In other words, when the safety movement elements (4) make contact with the ground, they follow the direction imposed by the other steered wheel.

In the preferred embodiment as shown in figure 1, the free end (3) of the bar (2) has a fork configuration and the stabilizer comprises two safety movement elements (4), each one of which is joined to one end of the fork. As was previously described, the safety movement elements are preferably auxiliary wheels with a rotary hub. The reason it preferably comprises two safety movement elements (4) is because this way the supporting stability is increased and the driver has more control. This enhances safety with regard to possible tire blowouts or punctures.

Preferably, the first detachable joining means (7), which join the first end (1) of the bar (2) to the axle (6), comprise a support piece which is joined in a tilting way to the first end (1) of the bar (2), and first U-shaped pieces which clasp the axle (6) and are joined to the support pieces. The tilting joint allows the bar (2) to pivot on the first end (1) thereof when the pneumatic cushion (5) inflates or deflates. In an exemplary embodiment, the first U-shaped pieces are U-bolts, of the type used in trucks.

In an exemplary embodiment, the bar (2) may be a leaf spring brace which is slightly flexible but sufficiently resistant. Preferably, the second detachable joining means (8), configured to join the pneumatic cushion (5) to the axle (6), comprise a metal plate which is directly joined to the pneumatic cushion (5) and second U-shaped pieces which clasp the axle (6) and are joined to the metal plate. The second U-shaped pieces are also preferably truck U-bolts. In an exemplary embodiment, the joint of the pneumatic cushion (5) to the bar (2), which may be uncoupled, is made by screwing the base of the pneumatic cushion (5) to said bar (2).

In another exemplary embodiment, the stabilizer additionally comprises an alarm. Said alarm is connected to the controller (13) such that when pressure loss is detected in one of the tires of the vehicle (with the pressure sensor (12)), at the same time that the electrovalve is actuated (9) in order to inflate the pneumatic cushion (5), the acoustic or luminous alarm signal is activated, for example a red LED. Preferably, the alarm is installed in the vehicle cabin such that the driver is informed as to when the stabilizer is activated and when it is not.

## Claims

1. A steering stabilizer which is installed in a vehicle and which acts in the case that a loss of pressure is detected in a tire and which comprises:
- a bar (2) with a first end (1);
- a pneumatic cushion (5) which is joined to the bar (2) such that by inflating or deflating it causes the tilting of the bar (2) about the first end (1);
- at least one safety movement element (4), joined to a free end (3) of the bar (2) and arranged such that when the pneumatic cushion inflates (5) and the bar (2) tilts, it comes into contact with the ground;
**characterized in that** it may be coupled to or uncoupled from an axle (6) of the vehicle and is reusable, therefore comprising:
- first detachable joining means (7) for the joining of the first end (1) of the bar (2) to the axle (6) of the vehicle;
- second detachable joining means (8) for the joining of the pneumatic cushion (5) to the axle (6) of the vehicle;
- an electrovalve (9) configured to be connected to a drum (10) and to the pneumatic cushion (5) and which regulates the passage of air between both components;
- a controller (11) which receives a signal from a sensor (12) which detects the pressure of at least one tire of the vehicle and which activates the electrovalve (9) by receiving a signal from the sensor (12) indicating low pressure in the tire, allowing the passage of air from the drum (10) to the pneumatic cushion (5);
- a reset device (13) connected to the electrovalve (9) configured to allow the pneumatic cushion (5) to deflate, causing the tilting of the bar (2).

2. The steering stabilizer according to claim 1, **characterized in that** the safety movement element (4) is an auxiliary wheel with a rotary hub.

3. The steering stabilizer according to claim 1, **characterized in that** it additionally comprises a spring arranged between the bar (2) and the safety movement element (4), configured to orient the safety movement element (4) in the advance direction of the vehicle.

4. The steering stabilizer according to claim 1, **characterized in that** the free end (3) of the bar (2) comprises a fork and the stabilizer comprises two safety movement elements (4), each one of them joined to one end of the fork.

5. The steering stabilizer according to claim 1, **characterized in that** the reset device (13) comprises a reset button connected to the electrovalve (9) such that when said button is actuated, the electrovalve (9) causes the pneumatic cushion (5) to deflate.

6. The steering stabilizer according to claim 1, **characterized in that** the first detachable joining means (7) comprise a support piece which is joined in a tilting way to the first end (1) of the bar (2), and U-shaped pieces which clasp the axle (6) and are joined to the support piece.

7. The steering stabilizer according to claim 1, **characterized in that** the second detachable joining means (8) comprise a metal plate which is directly joined to the pneumatic cushion (5) and second U-shaped pieces which clasp the axle (6) and are joined to the metal plate.

8. The steering stabilizer according to claim 1, **characterized in that** it additionally comprises an alarm, connected to the controller (13), configured to emit an acoustic or luminous alarm signal when the pressure sensor (12) detects that the pressure of a tire has decreased.
